# EUROPEAN PATENT APPLICATION

(11) **EP 4 844 911 A1**
(43) Date of publication of application: **25.11.2026**
(21) Application number: 26172455.3
(22) Date of filing: 15.04.2026
(51) Int. Cl.: H01M 50/204, H01M 50/289, H01M 50/691

(54) **POWER STORAGE DEVICE**

(30) Priority: 19.05.2025 JP 2025083096
(71) Applicant: Prime Planet Energy & Solutions, Inc., Chuo-ku, Tokyo 103-0022 (JP)
(72) Inventor: NOSAKI, Shuya, Tokyo,, 103-0022 (JP); ASAKURA, Jun, Tokyo,, 103-0022 (JP); FURUKAWA, Kimihiko, Tokyo, 103-0022 (JP); OKUDA, Yutaka, Tokyo,, 103-0022 (JP); TERAUCHI, Shinobu, Tokyo,, 103-0022 (JP)
(74) Representative: Kuhnen & Wacker Patent- und Rechtsanwaltsbüro PartG mbB

(57) **Abstract**

The present power storage device (2) is a power storage device (2) including: a first battery assembly (101); a second battery assembly (102) disposed above the first battery assembly (101); and a housing (200) that accommodates the first battery assembly (101) and the second battery assembly (102), wherein the housing (200) includes a support member (120) that partitions inside of the housing (200) into a first space (201A) that accommodates the first battery assembly (101) and a second space (201B) that accommodates the second battery assembly (102) disposed above the first battery assembly (101), and a drainage mechanism that guides a liquid generated in the second space (201B) so as to flow in a predetermined direction is provided inside the support member (120).

## Description

### CROSS REFERENCE TO RELATED APPLICATIONS

This nonprovisional application is based on Japanese Patent Application No. 2025-083096 filed on May 19, 2025 with the Japan Patent Office, the entire contents of which are hereby incorporated by reference.

### BACKGROUND OF THE INVENTION

### Field of the Invention

The present technology relates to a power storage device.

### Description of the Background Art

Japanese Patent Laying-Open No. 2018-55972 discloses a structure in which battery assemblies are disposed inside a housing of a power storage device so as to be stacked on each other in two stages upwardly/downwardly. Further, a drainage structure is provided by which a liquid generated in an upper space in which the battery assembly on the upper side is accommodated in the housing is guided from the upper space to another space different from a lower space in which the battery assembly on the lower side is accommodated in the housing.

### SUMMARY OF THE INVENTION

In the drainage structure of the power storage device as described above, a space for temporarily storing the liquid and allowing the liquid to flow therethrough is additionally provided on the lower surface side of the battery assembly on the upper side. Such a space provided inside the housing becomes a factor for decreasing volume efficiency of the power storage device.

It is an object of the present technology to provide a power storage device to suppress a decrease in volume efficiency of the power storage device even when a drainage structure is employed in a structure in which battery assemblies are disposed to be stacked on each other in two stages upwardly/downwardly.

The present technology provides the following power storage device.
[1] A power storage device comprising: a first battery assembly; a second battery assembly disposed above the first battery assembly; and a housing that accommodates the first battery assembly and the second battery assembly, wherein the housing includes a support member that partitions inside of the housing into a first space that accommodates the first battery assembly and a second space that accommodates the second battery assembly disposed above the first battery assembly, and a drainage mechanism that guides a liquid generated in the second space so as to flow in a predetermined direction is provided inside the support member.
[2] The power storage device according to [1], wherein the support member includes a lower support member located on a side of the first space and an upper support member located on a side of the second space, a boundary surface between the lower support member and the upper support member is inclined downward in the predetermined direction, and the liquid is drained in the predetermined direction along the inclination of the boundary surface as the drainage mechanism.
[3] The power storage device according to [2], wherein the upper support member has a higher drainage property than a drainage property of the lower support member.
[4] The power storage device according to [2] or [3], wherein the housing includes a bottom portion on which the first battery assembly is supported, a side wall portion that surrounds a periphery of the bottom portion, and a lid portion that closes an opening of an upper surface of the side wall portion, by supporting the upper support member by the side wall portion, the inside of the housing is partitioned into the first space and the second space, and a hollow portion through which the liquid flowing along the inclination of the boundary surface of the upper support member passes is provided in a region of the side wall portion supported by the upper support member.
[5] The power storage device according to any one of [2] to [4], wherein a plurality of the first battery assemblies are disposed in the first space, a drainage region is provided between adjacent first battery assemblies, and the liquid is drained toward the drainage region along the inclination of the boundary surface as the drainage mechanism.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a side view schematically showing an example of a vehicle including a power storage device.
Fig. 2 is an exploded perspective view showing an example of the power storage device.
Fig. 3 is a perspective view showing an example of a battery cell.
Fig. 4 is a cross sectional view taken along a line IV-IV in Fig. 2.
Fig. 5 is a perspective view showing a configuration of a support member.
Fig. 6 is a perspective view showing another configuration of the support member.
Fig. 7 is a perspective view showing another configuration of the support member.
Fig. 8 is a diagram corresponding to a cross section taken along a line VIII-VIII in Fig. 2 and showing another configuration of the power storage device.
Fig. 9 is a diagram corresponding to a cross section taken along line VIII-VIII in Fig. 2 and showing another configuration of the power storage device.
Fig. 10 is a diagram corresponding to a cross section taken along line VIII-VIII in Fig. 2 and showing another configuration of the power storage device.

### DESCRIPTION OF THE PREFERRED EMBODIMENTS

Hereinafter, embodiments of the present technology will be described. The same or corresponding portions are denoted by the same reference characters, and may not be described repeatedly.

In the embodiments described below, when reference is made to number, amount, and the like, the scope of the present technology is not necessarily limited to the number, amount, and the like unless otherwise stated particularly. In the embodiments described below, each component is not necessarily essential to the present technology unless otherwise stated particularly. The present technology is not limited to one that necessarily exhibits all the functions and effects stated in the present embodiment.

In the present specification, the terms "comprise", "include", and "have" are open-end terms. That is, when a certain configuration is included, a configuration other than the foregoing configuration may or may not be included.

In the present specification, when geometric terms and terms representing positional/directional relations are used, for example, when terms such as "parallel", "orthogonal", "obliquely at 45°", "coaxial", and "along" are used, these terms permit manufacturing errors or slight fluctuations. **In** the present specification, when terms representing relative positional relations such as "upper side" and "lower side" are used, each of these terms is used to indicate a relative positional relation in one state, and the relative positional relation may be reversed or turned at any angle in accordance with an installation direction of each mechanism (for example, the entire mechanism is reversed upside down).

Sizes such as width, length, and diameter of each member illustrated in the present specification are not limited to those shown in the figures, and can be appropriately changed. In the present specification, ordinal numbers such as "first" and "second" may be given to respective configurations, but these ordinal numbers do not limit priority, order, or the like unless explicitly defined.

In the present specification, when the term "power storage device" or "power storage cell" is used, the term "power storage device" or "power storage cell" is not limited to a battery or a battery cell, and may include, for example, a capacitor, a capacitor cell, or the like.

In the present specification, the term "battery" is not limited to a lithium ion battery, and may include other batteries such as a nickel-metal hydride battery and a sodium-ion battery. In the present specification, the term "electrode" may collectively represent a positive electrode and a negative electrode.

The "battery cell" can be mounted on vehicles such as a hybrid electric vehicle (HEV), a plug-in hybrid electric vehicle (PHEV), and a battery electric vehicle (BEV). It should be noted that the use of the "battery cell" is not limited to the use in a vehicle.

### (Power Storage Device 2)

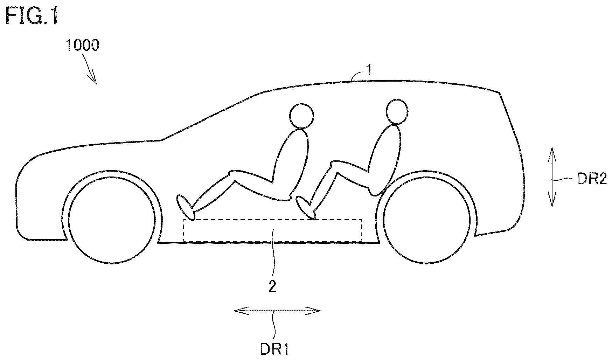

Fig. 1 is a side view schematically showing an example of a vehicle 1000 on which a power storage device 2 is mounted. In Fig. 1 and each of the figures described later, "DR1" indicates a frontward/rearward direction of vehicle 1000, "DR2" indicates an upward/downward direction of vehicle 1000, and "DR3" indicates a width direction of vehicle 1000.

As shown in Fig. 1, vehicle 1000 includes a vehicle body 1 and power storage device 2. Power storage device 2 is mounted on a lower portion of vehicle body 1. Power storage device 2 accommodates battery assemblies each having a housing in which battery cells are stacked and restrained. It should be noted that power storage device 2 may be a battery pack having a cell-to-pack (CTP) structure in which the battery cells are directly supported on a side wall of the housing, or may be a power storage device having a cell-to-chassis (CTC) structure in which the battery cells are directly incorporated in a frame of vehicle body 1.

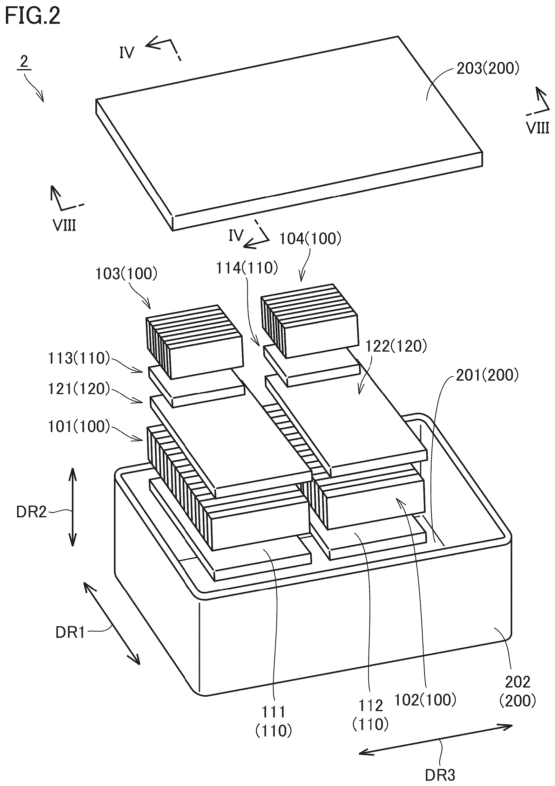

Fig. 2 shows an example of power storage device 2 in which a plurality of battery assemblies are accommodated in the housing. As shown in Fig. 2, power storage device 2 includes a housing 200, battery assemblies 100, cooling members 110, and support members 120. Battery assemblies 100, cooling members 110, and support members 120 are accommodated inside housing 200.

Each of battery assemblies 100 includes a plurality of battery cells arranged in the DR1 direction. Power storage device 2 includes four battery assemblies 101, 102, 103, 104. Each of battery assemblies 101, 102 (first battery assemblies) is longer than each of battery assemblies 103, 104 (second battery assemblies) in the DR1 direction (arrangement direction). Battery assembly 101 and battery assembly 103 are overlapped with each other in the DR2 direction. Battery assembly 102 and battery assembly 104 are overlapped with each other in the DR2 direction. Thus, power storage device 2 has a structure in which two battery assemblies are overlapped with each other in the upward/downward direction (DR2 direction) of vehicle 1000 at their parts (which are on the rear side of vehicle 1000 in the example of Fig. 2, but are not limited thereto) in the arrangement direction (DR1 direction) of the battery cells.

In power storage device 2, the arrangement of battery assemblies 100 can be appropriately changed. For example, only one of the group of battery assemblies 101, 103 and the group of battery assemblies 102, 104 arranged in two rows in the DR3 direction may be provided, or three or more rows may be provided.

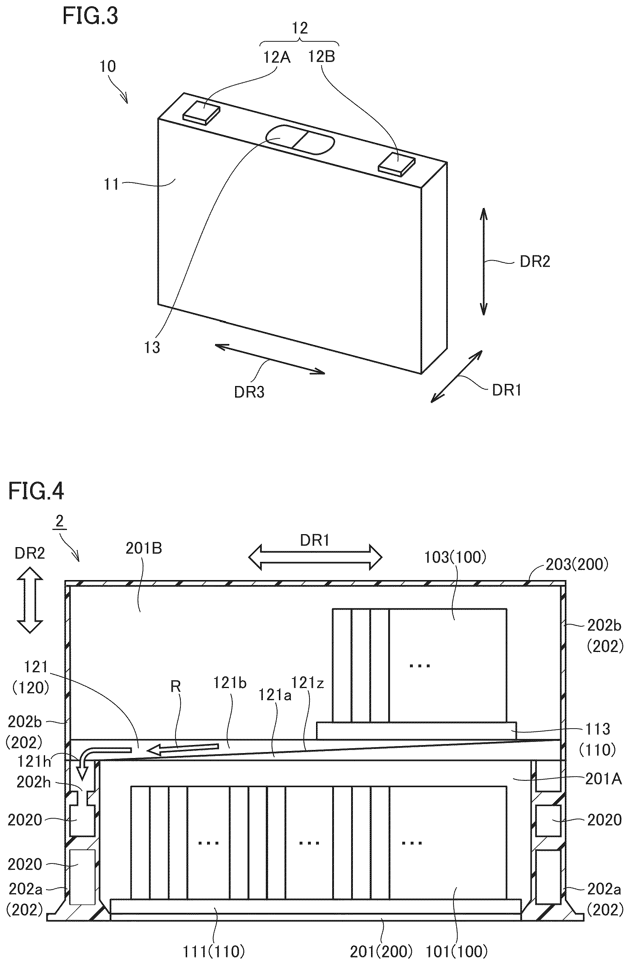

Housing 200 includes: a bottom portion 201 on which battery assemblies 101, 102 are supported; a side wall portion 202 that surrounds the periphery of bottom portion 201; and a lid portion 203 that closes an opening of an upper surface of side wall portion 202. Side wall portion 202 is a side wall standing in the DR2 direction. By supporting an end portion of each of support members 120 by side wall portion 202, the inside of housing 200 is partitioned into a first space 201A in which battery assemblies 101, 102 are disposed and a second space 201B in which battery assemblies 103, 104 are disposed (see Fig. 4).

Support members 120 include a first support member 121 disposed between battery assembly 101 and battery assembly 103, and a second support member 122 disposed between battery assembly 102 and battery assembly 104. A drainage mechanism that guides a liquid (dew condensation water, liquid leaked from cooling member 110 or battery cell 10, or the like) generated in second space 201B so as to flow in a predetermined direction is integrally provided inside each support member 120. The drainage mechanism will be described in detail later.

Cooling members 110 include a first cooling member 111 and a second cooling member 112 respectively disposed on the bottom portion sides of battery assemblies 101, 102, and a third cooling member 113 and a fourth cooling member 114 respectively disposed on the bottom surface sides of battery assemblies 103, 104. A cooling medium passage for cooling battery assembly 100 may be provided inside each cooling member 110, or a flow path through which gas discharged from battery assembly 100 (gas-discharge valve 13 of battery cell 10) flows may be formed. Cooling members 110 may not be provided depending on a specification of power storage device 2.

For the external sizes of power storage device 2, as an example, the length thereof in the DR1 direction is about 2500 mm, the length thereof in the DR3 direction is about 1800 mm, the length, in the DR2 direction, of the region in which battery assemblies 100 are overlapped is about 500 mm, and the length, in the DR2 direction, of a region involving one stage of battery assemblies 100 is about 300 mm.

The arrangement or the like of battery assemblies 100 is not limited to the arrangement shown in the figure. For example, in the arrangement of battery assemblies 100 as shown in Fig. 2, the plurality of battery cells 10 are arranged in the DR1 direction (frontward/rearward direction of vehicle 1000), but the plurality of battery cells 10 may be arranged in the DR3 direction (width direction of vehicle 1000).

### (Battery Cell 10)

As shown in Fig. 3, the configuration of each battery cell 10 (power storage cell) included in battery assembly 100 will be described. Battery cell 10 includes a case 11 having a substantially rectangular parallelepiped shape, and electrode terminals 12 and a gas-discharge valve 13 each provided at case 11.

Case 11 has long side surfaces facing each other in the DR1 direction, upper and bottom surfaces facing each other in the DR2 direction, and short side surfaces facing each other in the DR3 direction. Case 11 has a first size (thickness) in the DR1 direction, a second size (height) in the DR2 direction, and a third size (width or length) in the DR3 direction. In one example, the first size is less than the second size and the second size is less than the third size. When constructing battery assembly 100, battery cells 10 are arranged such that the long side surfaces of adjacent battery cells 10 face each other.

Electrode terminals 12 include a positive electrode terminal 12A and a negative electrode terminal 12B. Gas-discharge valve 13 is provided between positive electrode terminal 12A and negative electrode terminal 12B. Electrode terminals 12 and gas-discharge valve 13 are provided at the upper surface of case 11. However, the arrangement of electrode terminals 12 and gas-discharge valve 13 may be appropriately changed. For example, electrode terminal(s) 12 may be disposed at one or both of the short side surfaces of case 11. Further, one of each electrode terminal and gas-discharge valve 13 may be provided at the upper surface of case 11, and the other may be provided at the bottom surface of case 11.

### (Drainage Mechanism)

As shown in Fig. 4, the drainage mechanism employed in power storage device 2 will be described. In Fig. 4, the drainage mechanism provided in first support member 121 disposed between battery assembly 101 and battery assembly 103 will be described, but the same applies to the drainage mechanism of second support member 122 disposed between battery assembly 102 and battery assembly 104.

First support member 121 includes a lower support member 121a located on the first space 201A side and an upper support member 121b located on the second space 201B side. A boundary surface 121z between lower support member 121a and upper support member 121b is inclined downward in a predetermined direction (left side in the DR1 direction in the figure). The above-described liquid is drained in the predetermined direction (left side in the DR1 direction in the figure) (in the direction of arrow R in the figure) along the inclination of boundary surface 121z as the drainage mechanism.

Side wall portion 202 includes a lower side wall 202a that defines first space 201A and an upper side wall 202b that defines second space 201B. Lower side wall 202a is constituted of a hollow member having a hollow region 2020. An extruded material may be used for lower side wall 202a. The plate thickness of lower side wall 202a is larger than that of upper side wall 202b. As a result, lower side wall 202a protrudes toward first space 201A with respect to upper side wall 202b. Both end portions of first support member 121 (on the lower support member 121a side) are fixed with the end portions being placed on the upper ends of lower side wall 202a protruding toward first space 201A.

The above-described liquid having flowed along the inclination of boundary surface 121z in the predetermined direction (the left side in the DR1 direction in the figure) (in the direction of arrow R in the figure) is drained from a drainage hole 121h provided in the lower surface side of first support member 121 through a drainage hole 202h provided in hollow region 2020 of lower side wall 202a, as the drainage mechanism. The liquid having passed through drainage hole 202h may be accumulated in hollow region 2020, or may be drained to the outside of power storage device 2 through a drainage passage provided in a region not shown in the figure.

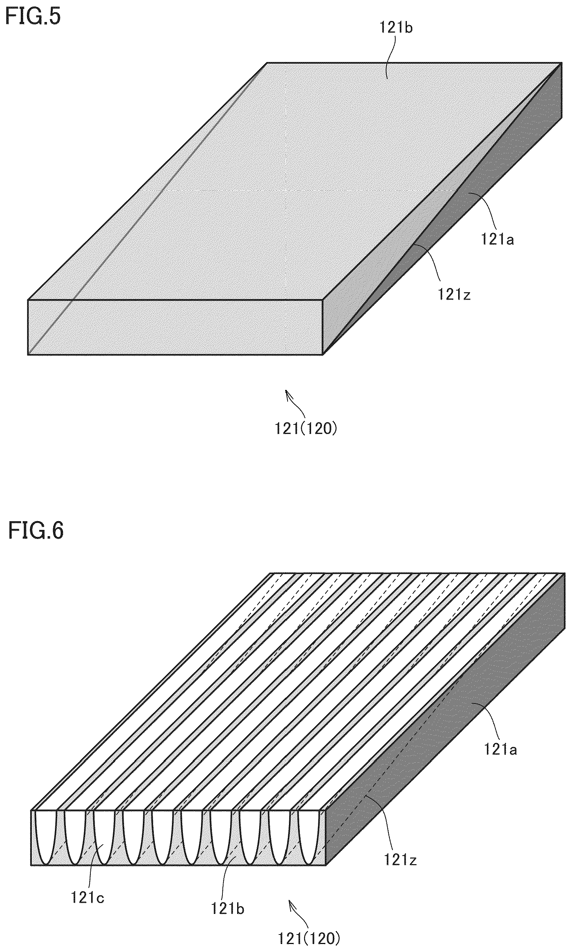

A specific configuration of first support member 121 will be described with reference to Figs. 5 to 7. First support member 121 shown in Fig. 5 includes lower support member 121a located on the first space 201A side and upper support member 121b located on the second space 201B side. Boundary surface 121z between lower support member 121a and upper support member 121b is gradually inclined downward toward the front side in the figure.

Upper support member 121b has a higher drainage property than that of lower support member 121a, and specifically, upper support member 121b is composed of a mesh member that allows a liquid to pass therethrough, and lower support member 121a is composed of a solid member that does not allow a liquid to pass therethrough. As a result, the liquid having passed through upper support member 121b reaches boundary surface 121z, and then flows downward along boundary surface 121z.

As shown in Fig. 6, a specific configuration of another first support member 121 will be described. First support member 121 shown in Fig. 6 includes lower support member 121a located on the first space 201A side and upper support member 121b located on the second space 201B side. Boundary surface 121z between lower support member 121a and upper support member 121b is gradually inclined downward toward the front side in the figure.

Here, lower support member 121a and upper support member 121b are composed of the same solid members that each do not allow a liquid to pass therethrough, but upper support member 121b is provided with a plurality of grooves 121c each having a bottom surface that is gradually deeper toward the front side in the figure. As a result, the bottom portion of groove 121c forms boundary surface 121z gradually inclined downward toward the front side in the figure. With this configuration, the liquid inside groove 121c of upper support member 121b flows downward along the bottom surface (boundary surface 121z) of groove 121c.

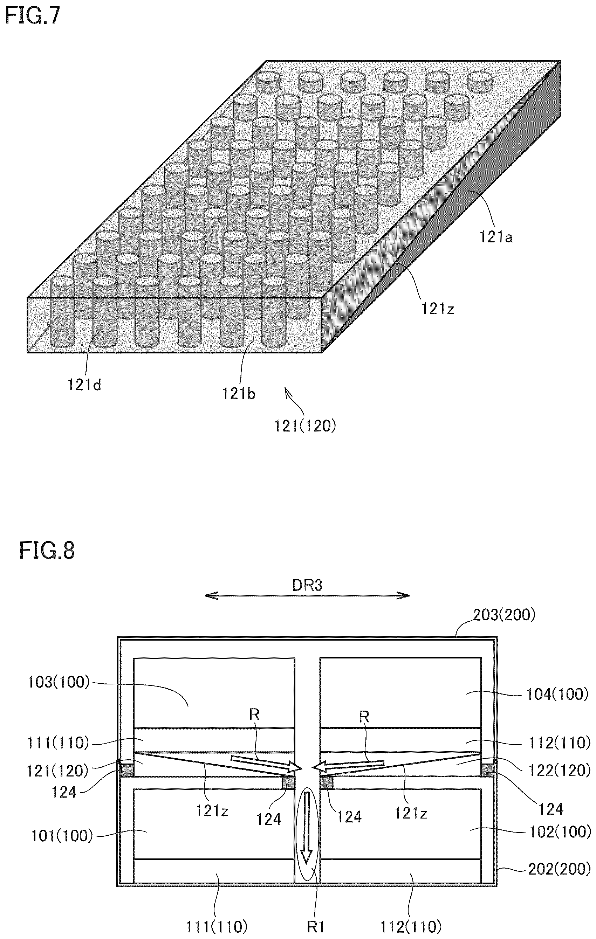

As shown in Fig. 7, still another specific configuration of first support member 121 will be described. The basic configuration is the same as that of first support member 121 shown in Fig. 5. In first support member 121 shown in Fig. 7, a plurality of columnar members 121d having different lengths are arranged in order to increase rigidity of upper support member 121b. The shape of each columnar member 121d is not limited to a circular tubular shape, and various shapes such as a square tubular shape and a triangular tubular shape can be employed. The lengths of columnar members 121d are gradually longer toward the front side in the figure.

As with first support member 121 shown in Fig. 5, the liquid having reached boundary surface 121z flows downward along boundary surface 121z.

Thus, when first support member 121 described above is used, the upper surface of upper support member 121b is a horizontal surface, with the result that battery assembly 103 placed on first support member 121 can be held in a horizontal state. Furthermore, the drainage mechanism that guides the liquid generated in second space 201B so as to flow in the predetermined direction is integrally provided inside first support member 121. As a result, it is not necessary to additionally provide a drainage mechanism, thereby suppressing a decrease in the volume efficiency of power storage device 2.

### (Other Drainage Mechanism)

Another drainage mechanism will be described with reference to Figs. 8 to 10. The above-described drainage mechanism has the structure in which the liquid flows to one end side of housing 200 in the DR1 direction. In a structure shown in Fig. 8, a drainage region R1 is provided between adjacent battery assemblies 101, 102 disposed in first space 201A, and boundary surfaces 121z are inclined toward the center in first support member 121. Similarly, also in second support member 122, boundary surfaces 121z are inclined toward the center.

As a result, the liquid generated in second space 201B is collected (in the center) between adjacent battery assemblies 101, 102 disposed in first space 201A. In drainage region R1 provided between battery assembly 101 and battery assembly 102, insulated harness and thermistor are disposed and the liquid can be prevented from be adhered to conductive portions of battery assembly 101 and battery assembly 102, so that a drainage flow path may be provided in this region. In the case where two or more battery assemblies are arranged, drainage region R1 does not necessarily need to be provided at the center as long as drainage region R1 is provided between adjacent battery assemblies.

In the configuration shown in Fig. 8, fixing members 124 are used to fix one side of each of first support member 121 and second support member 122 to side wall portion 202 and fix the other side of each of first support member 121 and second support member 122 to battery assembly 100 located therebelow.

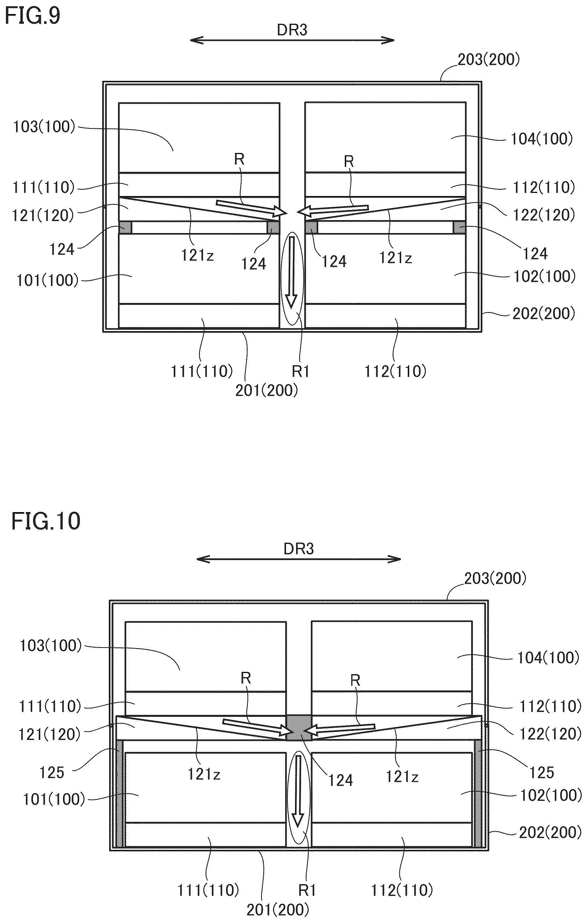

The fixing method is not limited thereto, and as shown in Fig. 9, they may be fixed to battery assemblies 100 located therebelow using fixing members 124.

Further, as shown in Fig. 10, the central regions of first support member 121 and second support member 122 may be coupled to each other by a fixing member 124, and the end portions of first support member 121 and second support member 122 may be fixed to bottom portion 201 by using support columns 125. First support member 121 and second support member 122 have a so-called gate-shaped structure, with the result that battery assembly 101 and battery assembly 102 can be supported independently with respect to battery assemblies 100 located therebelow.

Thus, also in each of the other drainage mechanisms, each of battery assembly 103 placed on first support member 121 and battery assembly 104 placed on second support member 122 can be held in the horizontal state. Furthermore, the drainage mechanism that guides the liquid generated in second space 201B so as to flow in the predetermined direction (center region) is integrally provided inside each of first support member 121 and second support member 122. As a result, it is not necessary to additionally provide a drainage mechanism, thereby suppressing a decrease in the volume efficiency of power storage device 2.

Although the embodiments of the present invention have been described and illustrated in detail, it is clearly understood that the same is by way of illustration and example only and is not to be taken by way of limitation. The scope of the present invention is defined by the terms of the claims, and is intended to include any modifications within the scope and meaning equivalent to the terms of the claims.

## Claims

1. A power storage device comprising:
a first battery assembly (101);
a second battery assembly (102) disposed above the first battery assembly (101); and
a housing (200) that accommodates the first battery assembly (101) and the second battery assembly (102), wherein
the housing (200) includes a support member (120) that partitions inside of the housing (200) into a first space (201A) that accommodates the first battery assembly (101) and a second space (201B) that accommodates the second battery assembly (102) disposed above the first battery assembly (101), and
a drainage mechanism that guides a liquid generated in the second space (201B) so as to flow in a predetermined direction is provided inside the support member (120).

2. The power storage device according to claim 1, wherein
the support member (120) includes a lower support member (121a) located on a side of the first space (201A) and an upper support member (121b, 121c, 121d) located on a side of the second space (201B),
a boundary surface (121z) between the lower support member (121a) and the upper support member (121b, 121c, 121d) is inclined downward in the predetermined direction, and
the liquid is drained in the predetermined direction along the inclination of the boundary surface (121z) as the drainage mechanism.

3. The power storage device according to claim 2, wherein the upper support member (121b) has a higher drainage property than a drainage property of the lower support member (121a).

4. The power storage device according to claim 2 or 3, wherein
the housing (200) includes
a bottom portion (201) on which the first battery assembly (101) is supported,
a side wall portion (202) that surrounds a periphery of the bottom portion (201), and
a lid portion (203) that closes an opening of an upper surface of the side wall portion (202),
by supporting the upper support member (121b) by the side wall portion (202), the inside of the housing (200) is partitioned into the first space (201A) and the second space (201B), and
a hollow portion (2020) through which the liquid flowing along the inclination of the boundary surface (121z) of the upper support member (121b) passes is provided in a region of the side wall portion (202) supported by the upper support member (121b).

5. The power storage device according to any one of claims 2 to 4, wherein
a plurality of the first battery assemblies (101, 102) are disposed in the first space (201A),
a drainage region (R1) is provided between adjacent first battery assemblies (101, 102), and
the liquid is drained toward the drainage region (R1) along the inclination of the boundary surface (121z) as the drainage mechanism.
